(19) **Europäisches Patentamt European Patent Office Office européen des brevets**

(11) **EP 2 983 431 B1**

(12) **EUROPEAN PATENT SPECIFICATION**

(45) Date of publication and mention
of the grant of the patent:
**11.10.2017 Bulletin 2017/41**

(51) Int Cl.:
*H04W 72/04* (2009.01)     *H04W 16/32* (2009.01)
*H04L 5/00* (2006.01)     *H04B 1/7156* (2011.01)

(21) Application number: **14779481.2**

(22) Date of filing: **31.03.2014**

(86) International application number:
**PCT/JP2014/059483**

(87) International publication number:
**WO 2014/163045 (09.10.2014 Gazette 2014/41)**

(54) **USER TERMINAL, SMALL BASE STATION, AND COMMUNICATIONS METHOD**

BENUTZERENDGERÄT, KLEINE BASISSTATION UND KOMMUNIKATIONSVERFAHREN

TERMINAL UTILISATEUR, PETITE STATION DE BASE ET PROCÉDÉ DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.04.2013 JP 2013079297**

(43) Date of publication of application:
**10.02.2016 Bulletin 2016/06**

(73) Proprietor: **NTT DOCOMO, INC.
Chiyoda-ku
Tokyo 100-6150 (JP)**

(72) Inventors:
• **KISHIYAMA, Yoshihisa**
Tokyo 100-6150 (JP)
• **YASUKAWA, Shimpei**
Tokyo 100-6150 (JP)
• **NAGATA, Satoshi**
Tokyo 100-6150 (JP)

(74) Representative: **Hoffmann Eitle
Patent- und Rechtsanwälte PartmbB
Arabellastraße 30
81925 München (DE)**

(56) References cited:
**WO-A1-2010/074142     WO-A1-2011/121925
WO-A1-2013/008406     WO-A2-2013/025054
US-A1- 2013 039 285**

• **PANASONIC: 'Remaining issues on SRS
enhancements in Rel.11' 3GPP TSG-RAN WG1
MEETING #70, RL-123284 August 2012, pages 1
- 7, XP050661174**
• **ZTE: 'Remaining Issues on UL DM RS Sequence
hopping' 3GPP TSG RAN1 #52, R1-080779
February 2008, XP050109263**
• **NTT DOCOMO: 'ENHANCED COORDINATION
ASPECTS FOR SMALL CELL ENHANCEMENT'
3GPP TSG RAN WG1 MEETING 72 R1-130408 01
February 2013, XP050663692**

**Description**

TECHNICAL FIELD

The present invention relates to a user terminal, a small base station and a communication method in next-generation communication systems.

BACKGROUND ART

Patent application number US2013/0039285 by S.Sorrentino and published on Feb.14, 2013, develops a base station method that involves assigning a terminal-specific base sequence and a terminal-specific cyclic shift hopping pattern for the generation of demodulation reference signals.
In a UMTS (Universal Mobile Telecommunications System) network, for the purposes of further increasing data rates, providing low delay and so on, long-term evolution (LTE) has been standardized (see Non-Patent Literature 1). In LTE, as multi access schemes, an OFDMA (Orthogonal Frequency Division Multiple Access)-based system is adopted for the downlink and an SC-FDMA (Single Carrier Frequency Division Multiple Access)-based system is adopted for the uplink.
Besides, for the purposes of achieving further broadbandization and higher speed, successor systems to LTE have been also studied (for example, LTE advanced or LTE enhancement, hereinafter referred to as "LTE-A"). In the LTE-A system, study has been made about HetNet (Heterogeneous Network) in which a small cell (for example, pico cell, femto cell or the like) having a relatively small coverage area of about several ten meters radius is arranged within a macro cell having a relatively wide coverage area of about several kilometers radius (for example, Non-Patent Literature 2).

CITATION LIST

NON-PATENT LITERATURE

    Non-Patent Literature 1: 3GPP TS 36.300 "Evolved UTRA and Evolved UTRAN Overall description"
    Non-Patent Literature 2: 3GPP TR 36.814 "E-UTRA Further advancements for E-UTRA physical layer aspects"

SUMMARY OF INVENTION

TECHNICAL PROBLEM

In the above-mentioned HetNet, it is expected that a radio communication system be designed to support macro cells and there be provided a high-speed radio service by near field communication in a small cell such as a shopping mall or in door as well as in a macro cell environment. Therefore, a plurality of small cells are arranged within a macro cell and randomizing of uplink control signals between small cells cannot be supported well, which makes it difficult to simplify cell planning to implement many small cells within the macro cell.
The preset invention was carried out in view of the foregoing and aims to provide a user terminal, a small base station and a communication method capable of randomizing uplink control signals between a plurality of small cells arranged in a macro cell sufficiently and simplifying cell planning of the small cells.

SOLUTION TO PROBLEM

The present invention provides a user terminal that is capable of communicating with a macro base station covering a macro cell and a small base station covering a small cell located within the macro cell, the user terminal including: a signal generating section that generates uplink signals using uplink signal sequences of zero autocorrelation except at a synchronization point; and a signal allocating section that allocates the uplink signals to subframes by using a hopping pattern where a sequence number of an uplink signal sequence is switched per subframe in a predetermined cycle, wherein a hopping cycle of the uplink signal sequences in a hopping pattern for the small station is longer than a hopping cycle of the uplink signal sequences in a hopping pattern for the macro base station.

ADVANTAGEOUS EFFECTS OF INVENTION

According to the present invention, uplink signal sequences are hopped in a small cell using a longer-cycle hopping pattern than that of a macro cell. With this structure, it is possible to randomize the uplink signal sequences well between the small cells without increase in the number of signal sequences. This further allows randomizing of uplink control signals generated from the uplink signal sequences and simplifying of cell planning when implementing a plurality of small cells within a macro cell.

BRIEF DESCRIPTION OF DRAWINGS

Fig. 1 is a conceptual diagram of HetNet;
Fig. 2 is a diagram illustrating connection between a macro base station and small base stations and connection between small base stations;
Fig. 3 provides diagrams explaining a first randomizing method of uplink signal sequences;
Fig. 4 provides diagrams explaining a second randomizing method of uplink signal sequences;
Fig. 5 provides diagrams for explaining the method for extending USID for SCell;
Fig. 6 is a diagram schematically illustrating an example of a radio communication system according to the present embodiment;
Fig. 7 is a diagram for explaining the overall configuration of a radio base station according to the present embodiment;
Fig. 8 is a diagram for explaining the functional structures of the radio base station according to the present embodiment;
Fig. 9 is a diagram for explaining the overall configuration of a user terminal according to the present embodiment;
Fig. 10 is a diagram for explaining the functional structures of the user terminal according to the present embodiment;
Fig. 11 is a diagram for explaining a modified embodiment of the second randomizing method of uplink signal sequences; and
Fig. 12 is a diagram for explaining uplink transmission power control according to the present embodiment.

DESCRIPTION OF EMBODIMENTS

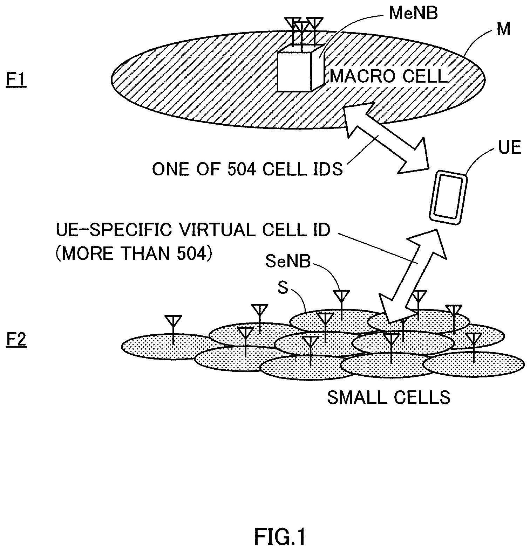

Fig. 1 is a conceptual diagram of HetNet. As illustrated in Fig. 1, HetNet is a radio communication system in which a macro cell M and a small cell S are located geographically overlapping each other at least partially. HetNet is configured to include a radio base station (hereinafter referred to as "macro base station") MeNB forming the macro cell M, a radio base station (hereinafter referred to as "small base station") SeNB forming the small cell S and a user terminal UE that communicates with the macro base station MeNB and the small base station SeNB. The small cell S conceptually includes a phantom cell, a pico cell, a nano cell, a femto cell and a micro cell.

In such a HetNet configuration, there is expected a scenario (separate frequency) in which different carriers are applied to the macro cell M and the small cell S to perform CA (Carrier Aggregation). In the macro cell M, for example, a carrier of relatively low frequency band (hereinafter referred to as "low-frequency band carrier") F1 of 800 MHz or 2 GHz is used, while in a plurality of small cells S, a carrier of relatively high frequency carrier (hereinafter referred to as "high-frequency band carrier") F2 of 3.5 GHz is used.

In other words, in the macro cell M, the low-frequency band carrier F1 is used to support high transmission power density thereby to assure wide coverage. On the other hand, in the small cell S, the high-frequency band carrier F2 is used to assure capacity thereby to realize high-speed radio service by near field communication. Here, the frequency bands of the carriers of the macro cell M and the small cell S are illustrated merely as an example. The carrier of the macro cell M may be 3.5 GHz and the carrier of the small cell S may be 800 MHz, 2 GHz, 1.7 GHz or the like.

Besides, the small cell S is desired to support power saving and random cell planning as well as enough capacity. Therefore, the small cell S may be designed with a frequency carrier that is specialized for the small cell S. The frequency carrier for the small cell S is preferably configured to stop transmission in the absence of traffic, considering interference due to random cell planning and power saving. In view of this, the frequency carrier for the small cell S can be configured as extremely UE-specific new carrier type NCT (New Carrier Type). This NCT may be called Additional Carrier type or Extension Carrier Type.

NCT is designed based on EPDCCH (Enhanced Physical Downlink Control Channel) and DM-RS (Demodulation-Reference Signal) without using PSS/SSS (Primary Synchronization Signal/Secondary Synchronization Signal), CRS (Cell-specific Reference Signal), PDCCH (Physical Downlink Control channel) and so on. Here, EPDCCH is a channel using a predetermined frequency band within a PDSCH region (data signal region) as a PDCCH region (control signal region). EPDCCH allocated to the PDSCH region is demodulated using DM-RS.

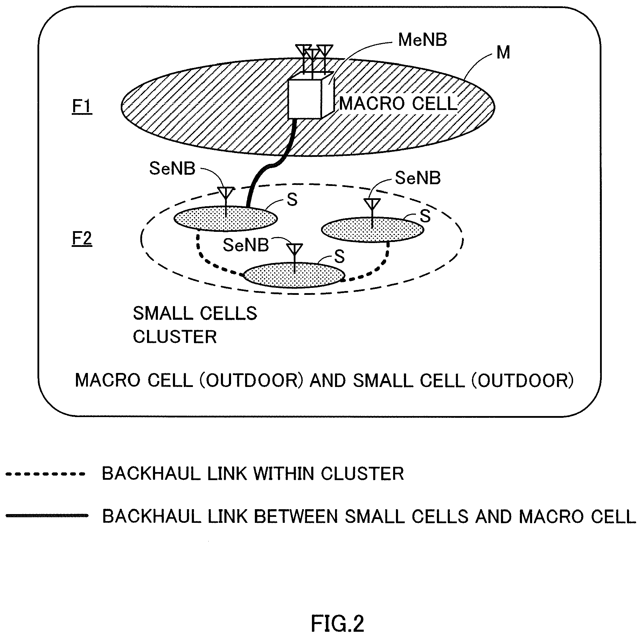

As illustrated in Fig. 2, in the above-described HetNet scenario, the macro base station MeNB and each small base station SeNB may be connected to each other wiredly by an optical fiber, non-optical fiber (X2 interface) or the like or wirelessly. Connection between base stations with low delay using an optical fiber is called "ideal backhaul" and connection between base stations using X2 interface is called "Non-ideal backhaul". In ideal backhaul, transmission and reception of information between base stations can be controlled with low delay, as compared with non-ideal backhaul.

By the way, in an urban area, there is assumed to be shortage of cell IDs (PCI: Physical Cell Identity) even in a current macro-cell environment. Therefore, when planning a plurality of small cells S within a macro cell M, much more cell IDs are considered to be required. As described above, there is a demand to simplify cell planning of the small cell S, and it is desired that physical channels and signals be randomized by ID assigned (dispensed) to each user, instead of fixed cell IDs. Therefore, consideration is given to use of UE-Specific ID (hereinafter referred to as "USID") introduced in Rel-11. USID may be also called "virtual cell ID".

USID defined in Rel-11 is identification information used in various processing of physical channels and signals. For example, in Rel-11, USID is introduced, on downlink, into DM-RS, CSI-RS (Channel State Information-Reference Signal) and EPDCCH, while USID is introduced, on uplink, into DM-RS for PUSCH (Physical Uplink Shared Channel) and PUCCH (Physical Uplink Control Channel). In addition, in the small cell S, 504 USIDs have been considered to be increased up to a sufficient number of USIDs for randomization between small cells S.

Specifically, in CoMP (Coordinated Multiple Point) transmission illustrated in Fig. 1, one of existing 504 cell IDs is assigned to the carrier of the macro cell M (PCell) and 504 or more USIDs are assigned to the carriers of the small cells S (SCells). Thus, if the number of USIDs of the small cells S is increased, there is need to randomize uplink physical channels and signals between small cells S. As for DM-RS and PUCCH, signals are generated using uplink signal sequences such as Zadoff-Chu sequences, but 30 root sequences of the uplink signal sequences are not much enough to randomize the signals, and therefore, group hopping has been adopted.

In group hopping, sequence numbers of uplink signal sequences (sequence group numbers) are switched (changed) per subframe in a predetermined cycle (per slot). Therefore, there are only 30 uplink signal sequences that are able to be allocated to each subframe (slot), but by using different hopping patterns, randomization can be achieved from the viewpoint of the whole hopping cycle. That is, in some subframes, signal sequences may collide with each other between cells, but such collision is prevented in the other subframes. Here, uplink signal sequences are CAZAC sequences having constant amplitude in the time and frequency domains and having zero autocorrelation (no correlation) except at synchronization points

Since the macro cell M has 504 cell IDs, it is possible to randomize uplink signal sequences by 30 root sequences of the uplink signal sequences and 17 hopping patterns. However, if there is further increase in the number of USIDs of the small cells S, it is difficult to randomize uplink control signals by the same number of sequences of uplink signals (sequence length) and the same hopping patterns as those of the macro cell M. For example, there are 1000 USIDs of the small cells S, about 330 or more hopping patterns may be required. Therefore, there is a limit to increase in hopping patterns of current hopping cycle (10 msec).

Then, the present inventors have made the present invention to achieve randomizing of uplink signal sequences in association with increase in small cells S. That is, the gist of the present invention is to increase hopping patterns by using, in the small cell S, a longer-cycle hopping pattern than that of the macro cell M thereby to achieve randomizing of uplink signal sequences. In addition, in broadband transmission, it is possible to achieve randomizing of uplink signal sequences by increasing the number of uplink signal sequences (sequence length). With this structure, it is possible to simplify (facilitate) cell planning of small cells S.

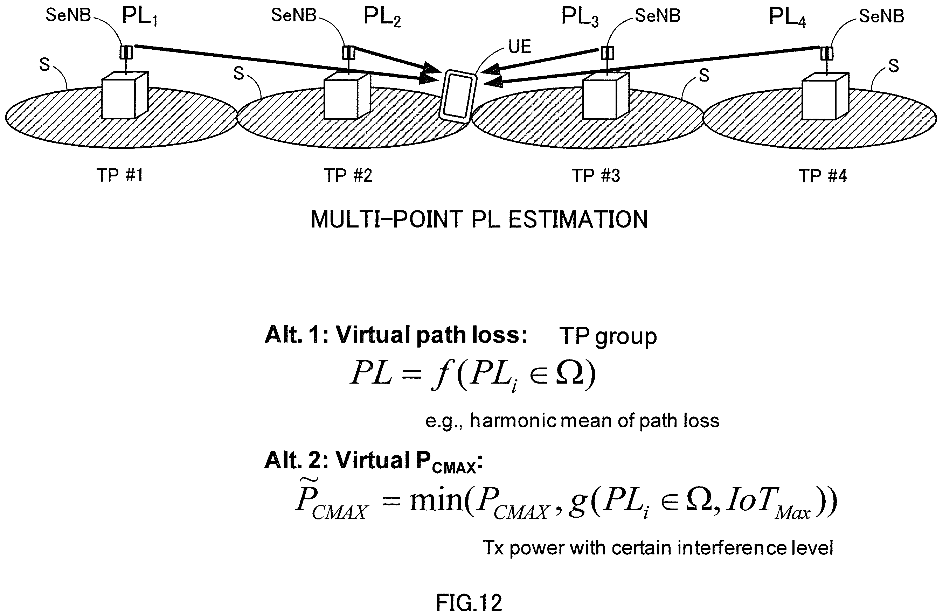

In addition, as illustrated in Fig. 12, transmission power control is performed using path loss values and uplink interference (IoT) between a plurality of small cells S (in Fig. 12, these are used to configure virtual path loss and upper limit of transmission power) thereby to expect increase in frequency use efficiency. For example, it is assumed that a user terminal UE belongs to a TP (Transmission Point) group consisting of TP #1 to TP #4. In this case, the user terminal UE estimates path loss values ($PL_1$-$PL_4$) of TP #1 to TP #4 thereby to perform first transmission power control using virtual path loss values or second transmission power control using virtual upper limits of transmission power.

In the first transmission power control, the following equation (1) is used to calculate a virtual path loss value, in which PL is a virtual path loss value, $\Omega$ is a TP group, $PL_i$ is a path loss value of each small cell S. Here, $f(PL_i \in \Omega)$ is a function to obtain harmonic mean.

[EQUATION 1]

$$(1)$$

$$PL = f(PL_i \in \Omega)$$

With this equation, a virtual path loss value is obtained, and this virtual path loss value is used as a basis to control transmission power of the user terminal UE to such a degree as not to cause interference to its surroundings.

In the second transmission power control, a virtual upper limit of transmission power is calculated using the equation (2), in which $\tilde{P}_{CMAX}$ is a virtual upper limit of transmission power, $P_{CMAX}$ is an upper limit of transmission power, $\Omega$ is TP group, $PL_i$ is a path loss value of each small cell S, $IoT_{Max}$ is an uplink interference amount. Here, $g(PL_i \in \Omega, IoT_{Max})$ is a function to obtain transmission power of a predetermined interference level.

[EQUATION 2]

$$(2)$$

$$\tilde{P}_{CMAX} = \min(P_{CMAX}, g(PL_i \in \Omega, IoT_{Max}))$$

With this equation, a virtual upper limit of transmission power is obtained, and this virtual upper limit of transmission power is used as a basis to control transmission power of the user terminal UE to such a degree as not to cause interference to its surroundings.

Since this first transmission power control and the second transmission power control are used to be able to suppress transmission power of a user terminal UE not to cause interference to its surroundings, it is possible to reduce interference between user terminals UEs (between small cells S) and improve frequency use efficiency of each user terminal (small cell S).

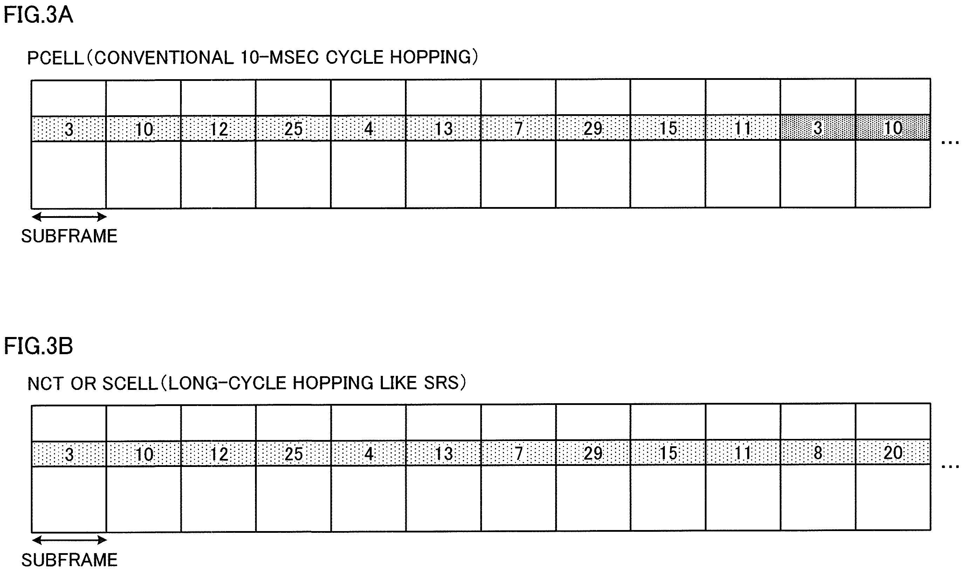

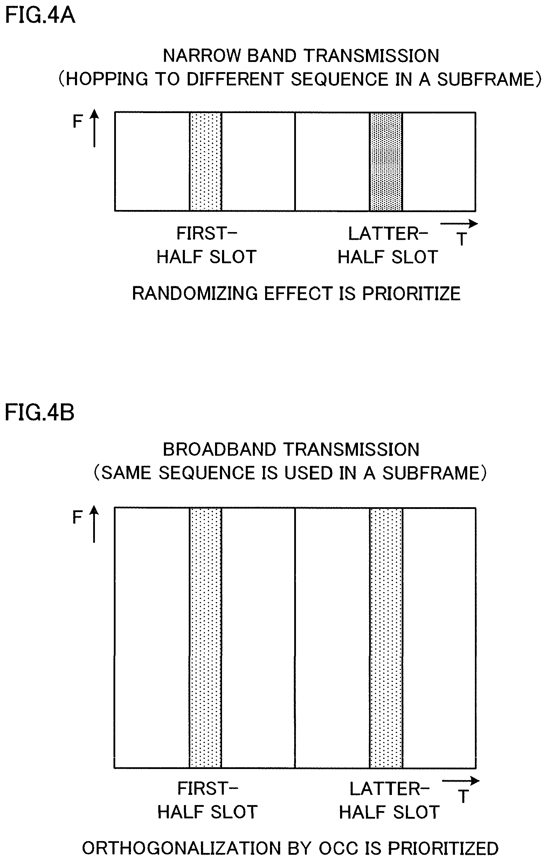

The following description is made about randomizing of uplink signal sequences, with reference to Figs. 3 and 4. Here, it is assumed that the user terminal is applied with carrier aggregation with the macro cell as PCell and the small cell as SCell (NCT). In Fig. 3, actually, the first-half slot and the latter-half slot of each subframe are allocated with different sequence numbers, but, for convenience of explanation, allocation to each slot is omitted here.

First description is made about the first randomizing method of uplink signal sequences. As illustrated in Fig. 3A, in PCell, sequence numbers of uplink signal sequences are hopped in a 10-subframe cycle. That is, the hopping pattern of sequence numbers is repeated in a cycle of 10 subframes. For example, the top subframe to 10th subframe are assigned with the sequence numbers [3, 10, 12, 25, 4, 13, 7, 29, 15, 11] and the same hopping pattern is applied to the 11th and later subframes.

In PCell, enough randomizing of uplink signal sequences is achieved even by repeating the hopping pattern in a cycle of 10 subframes. Repetition of the hopping pattern in a cycle of 10 subframes in PCell is performed because of the need to establish frame synchronization first with the PCell. Since frame numbers are not yet established, there is need to define the hopping pattern as the function of subframe numbers.

On the other hand, as illustrated in Fig. 3B, in SCell, as frame synchronization is already established in PCell, it is possible to hop sequence numbers of uplink signal sequences in a longer cycle (10 msec or more) than that of PCell. That is, the hopping pattern of sequence numbers is repeated in a cycle of 10 or more subframes. For example, the sequence numbers [3, 10, 12, 25, 4, 13, 7, 29, 15, 11, 8, 20, ...] are allocated to subframes, starting with the top subframe, and the same hopping pattern is applied to the next cycle.

In SCell, as the hopping cycle is made relatively longer than that of PCell, it is possible to increase hopping patterns. Therefore, it is possible to achieve randomizing of uplink signal sequences, that is, randomizing of uplink DM-RSs and PUCCHs sufficiently, thereby to simplify cell planning of small cells. In addition, as randomizing is achieved without increase in number of uplink signal sequences, this is effective even in the case of narrow band transmission where there is limit in sequence numbers to support. In SCell, the hopping pattern may be also defined as the function not only of subframe numbers, but also of frame numbers.

In the first randomizing method, the hopping pattern may be determined by the user terminal or by the radio base station. The hopping pattern may be given by RRC signaling. Since the hopping pattern is defined as being determined in accordance with the cell ID or USID, it may be signaled in association with USID. Or, it may be signaled only in association with a second USID described later. Signaling method of USID will be described later.

Next description is made about the second randomizing method of uplink signal sequences. Since the number of uplink signal sequences to support is configured to be almost equal to the number of subcarriers, there is limit in number of uplink signal sequences in the case of narrow band transmission as illustrated in Fig. 4A. On the other hand, in the case of broadband transmission as illustrated in Fig. 4B, more uplink signal sequences are able to be supported in accordance with the number of subcarriers. Therefore, in broadband transmission of a predetermined band or more, it is possible to achieve randomizing by increasing the number of uplink signal sequences. For example, in the broadband of 5 MHz, 300 subcarriers are supported and the number of uplink signal sequences can be increased to about 300.

In this case, the uplink signal sequences are increased in broadband transmission of a predetermined band or more (for example, 50 or more resource blocks). Particularly, in SCell, as broadband transmission using a high frequency carrier is performed mainly, it is effective to increase uplink signal sequences. With this structure, it is possible to achieve randomizing of uplink signal sequences without increase in hopping patterns. In addition, when enough sequences are given in broadband transmission, the group hopping of uplink signal sequences may be disabled.

In group hopping, the first-half slot and the latter-half slot are allocated with different uplink signal sequences (see Fig. 4A), however, if the second randomizing method is adopted to disable group hopping, the first-half slot and the latter-half are allocated with the same uplink signal sequence (see Fig. 4B). Thus, in broadband transmission, the number of uplink signal sequences is increased instead of randomizing of uplink signal sequences by group hopping. In this case, orthogonalization by OCC (Orthogonal Cover Code) is performed between users.

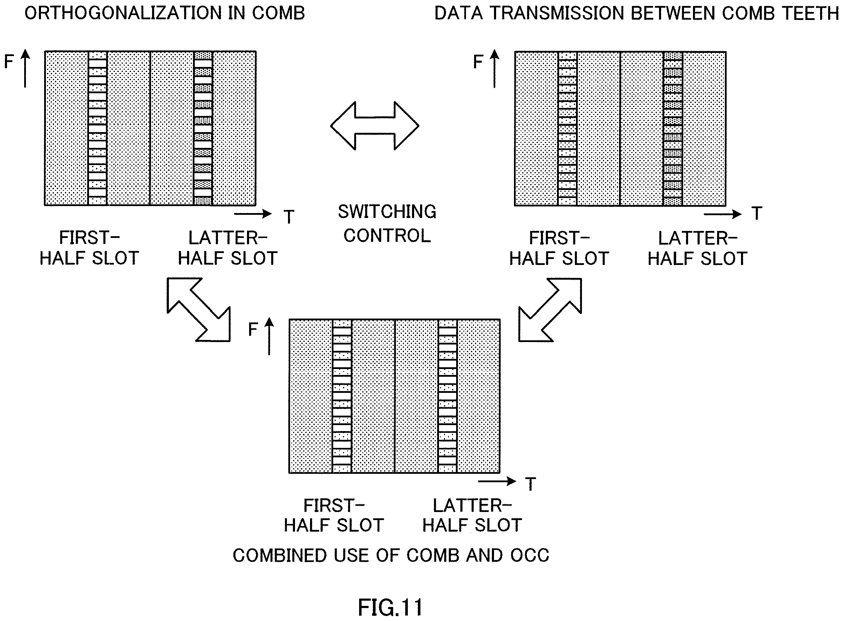

Besides, as illustrated in Fig. 11, orthogonalization may be performed using Comb (comb teeth) used in SRS (Sounding Reference Signal) instead of OCC. In this case, data may be transmit or may not be transmitted between comb teeth. Further, there is another example using the comb teeth as well as OCC in which the first-half slot and the latter-half slot are allocated with the same uplink signal sequence. Switching between them may be signaled to the user terminal by using a control signal.

Furthermore, in the second randomizing method, increase of uplink signal sequences and ON/OFF of group hopping may be determined by the user terminal or by the radio base station. Instructions to increase uplink signal sequences and switch ON or OFF group hopping may be given by RRC signaling or in association with USID. They may be given only in association with a second USID (described later).

Furthermore, the first randomizing method and the second randomizing method may be used in combination. In this case, the first randomizing method is applied to the case of narrow band transmission of a narrower band than a predetermined band, and the second randomizing method is applied to the case of broadband transmission of a broader band than the predetermined band. With this structure, in narrow band transmission, hopping patterns are increased to be able to reduce collision between uplink signal sequences, while in broadband transmission, uplink signal sequences are increased to be able to reduce collision between uplink signal sequences. With this structure, it is possible to select an appropriate randomizing method in accordance with the transmission band of SCell dynamically.

When the first randomizing method and the second randomizing method are changed dynamically, determination of which randomizing method to select may be made by the user terminal or by the radio base station. If the randomizing method is determined by the radio base station, the randomizing method may be given by RRC signaling or by use of USID. The USID notification method will be described later.

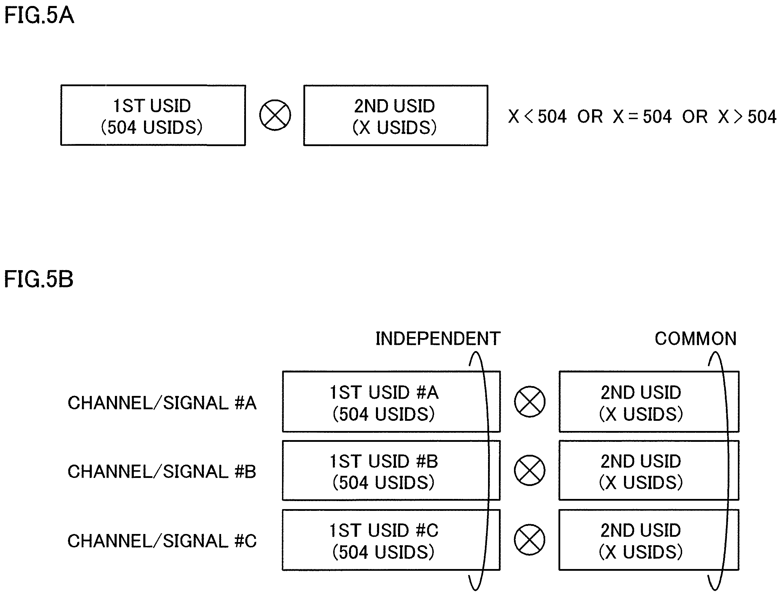

Next description is made about the method for extending USID for SCell, with reference to Fig. 5. USID for SCell is generated by extending USID (virtual cell ID) defined in Rel-11. In this case, existing 504 USIDs are defined as first USIDs (first identifiers) and second USIDs (second identifiers) are defined in addition to the first USIDs, thereby to increase USIDs. As illustrated in Fig. 5A, the USIDs are increased in number by spreading (multiplying) the first USIDs by the second USIDs. In this case, the number of second USIDs may be 504 that is equal to the number of USIDs defined in Rel-11 or may be more than 504 or less than 504.

Here, USID for SCell may be calculated from the first USIDs and the second USIDs, and any calculation method may be used. For example, the first USIDs and the second USIDs may be added together. Or, as illustrated in Equation (3), the number of USIDs for SCell may be equal to the number of USIDs defined in Rel-11 when the number of second USIDs is 0. Here, the equation (3) is given for the illustrative purpose only and is not intended for limiting the preset invention.

(3)

$$\text{USID} = \text{First USIDs} + \text{Second USIDs} \times \text{The number of first USIDs (504)}$$

In addition, as illustrated in Fig. 5B, the first USIDs are applied to each physical channel and signal independently, while the second USIDs may be applied to each physical channel and signal on a common basis or on a group basis. The group unit of the second USIDs may include, for example, uplink group and downlink group. The second identifier is not limited to a user-specific identifier such as second USID. The second identifier may be any identifier that generates USID by calculation of the first USID.

Here, the USID for SCell may be given from PCell (macro cell) specifically to the user by RRC signaling or may be given from the SCell (small cell) by a broadcast channel or RRC signaling. When it is given from SCell, it may be associated with a signal sequence of DS (Discovery Signal) defined for SCell detection. Further, when USID for SCell is generated from the first USID and second USID, the first USID and the second USID may be given by different methods.

For example, the first USID may be given from PCell and the second USID may be given from SCell in association with DS. Or, the first USID may be given from PCell and the second USID may be broadcast from SCell. Further, the first USID may be given from PCell by RRC signaling and the second USID may be given in association with the cell ID of the PCell. Application or non-application of second USID may be associated with signaling that indicates whether or not to apply NCT or specific TM (Transmission Mode) to the user terminal.

The following description is made in detail about a radio communication system according to the present embodiment. The above-described first and second randomizing methods of uplink signal sequences are applied to this radio communication system.

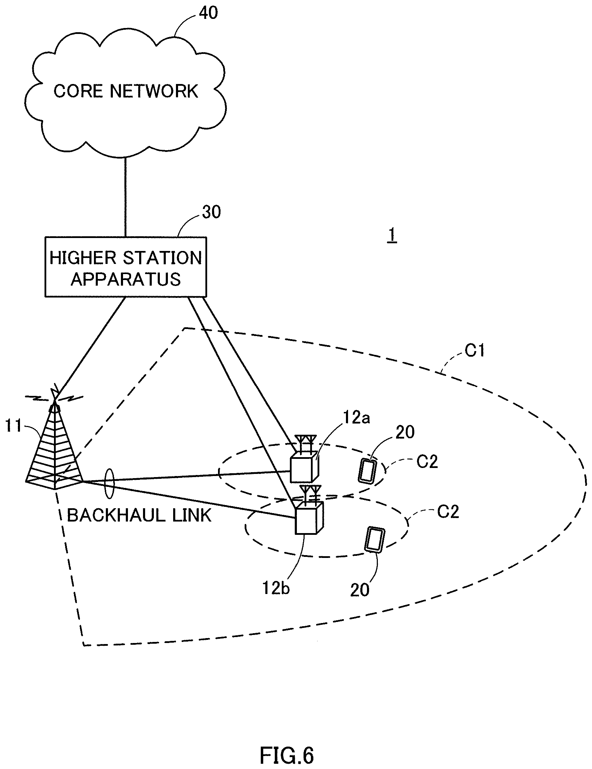

Fig. 6 is a schematic diagram of the radio communication system according to the present embodiment. The radio communication system illustrated in Fig. 6 is an LTE system or a system comprising a SUPER 3G. In this radio communication system, carrier aggregation (CA) can be applied in which a plurality of base frequency blocks (component carriers) are aggregated, each component carrier being a unit of system band of the LTE system. This radio communication system may be called IMT-Advanced, 4G, or FRA (Future Radio Access).

The radio communication system 1 illustrated in Fig. 6 includes a radio base station 11 forming a macro cell C1, and radio base stations 12a and 12b that are arranged within the macro cell C1 and each form a smaller cell C2 than the macro cell C1. In the macro cell C 1 and small cells C2, user terminals 20 are located. Each user terminal 20 is able to be connected to both of the radio base station 11 and the radio base stations 12 (dual connectivity). In this case, it is expected that each user terminal 20 uses the macro cell C1 and small cell C2 of different frequency bands simultaneously by CA (Carrier Aggregation).

Communication between the user terminal 20 and the radio base station 11 is performed by using a carrier of a relatively low frequency band (for example, 2 GHz) and a narrow bandwidth (also called "legacy carrier"). On the other hand, the communication between the user terminal 20 and a radio base station 12 may be performed by using a carrier of a relatively high frequency band (for example, 3.5 GHz) and a broad bandwidth or by using the same carrier as communication with the radio base station 11. As the carrier type between the user terminal 20 and the radio base station 12, new carrier type (NCT) may be used. The radio base station 11 and each radio base station 12 (or the radio base stations 12) are connected to each other wiredly (optical fiber, X2 interface or the like) or wirelessly.

The radio base stations 11 and 12 are connected to a higher station apparatus 30, and are also connected to a core network 40 via the higher station apparatus 30. The higher station apparatus 30 includes, but is not limited to, an access gateway apparatus, a radio network controller (RNC), a mobility management entity (MME). Each radio base station 12 may be connected to the higher station apparatus 30 via the radio base station 11.

The radio base station 11 is a radio base station having a relatively wide coverage area and may be called eNodeB, macro base station, transmission/reception point or the like. The radio base station 12 is a radio base station having a local coverage area and may be called small base station, pico base station, femto base station, Home eNodeB, RRH (Remote Radio Head), micro base station, transmission/reception point or the like. In the following description, the radio base stations 11 and 12 are collectively called radio base station 10, unless they are described discriminatingly. Each user terminal 20 is a terminal supporting various communication schemes such as LTE, LTE-A and the like and may comprise not only a mobile communication terminal, but also a fixed or stationary communication terminal.

In the radio communication system, as multi access schemes, OFDMA (Orthogonal Frequency Division Multiple Access) is adopted for the downlink and SC-FDMA (Single Carrier Frequency Division Multiple Access) is adopted for the uplink. OFDMA is a multi-carrier transmission scheme to perform communication by dividing a frequency band into a plurality of narrow frequency bands (subcarriers) and mapping data to each subcarrier. SC-FDMA is a single carrier transmission scheme to perform communications by dividing, per terminal, the system band into bands formed with one or continuous resource blocks, and allowing a plurality of terminals to use mutually different bands thereby to reduce interference between terminals.

Here, description is made about communication channels used in the radio communication system illustrated in Fig. 6. As for downlink communication channels, there are used a PDSCH (Physical Downlink Shared Channel) that is used by each user terminal 20 on a shared basis and downlink L1/L2 control channels (PDCCH, PCFICH, PHICH, enhanced PDCCH). The PDSCH is used to transmit user data and higher control information. The PDCCH (Physical Downlink Control Channel) is used to transmit PDSCH and PUSCH scheduling information and so on. PCFICH (Physical Control Format Indicator Channel) is used to transmit the number of OFDM symbols used in PDCCH. PHICH (Physical Hybrid-ARQ Indicator Channel) is used to transmit HARQ ACK/NACK for PUSCH. Enhanced PDCCH (EPDCCH) may transmit PDSCH and PUSCH scheduling information and so on. This EPDCCH is frequency-division-multiplexed with PDSCH (Downlink Shared Data Channel).

As for the uplink communication channels, there are used a PUSCH (Physical Uplink Shared Channel) that is used by each user terminal 20 on a shared basis and a PUCCH (Physical Uplink Control Channel) as an uplink control channel. The PUSCH is used to transmit user data and higher control information. And, PUCCH is used to transmit downlink radio quality information (CQI: Channel Quality Indicator), ACK/NACK and so on.

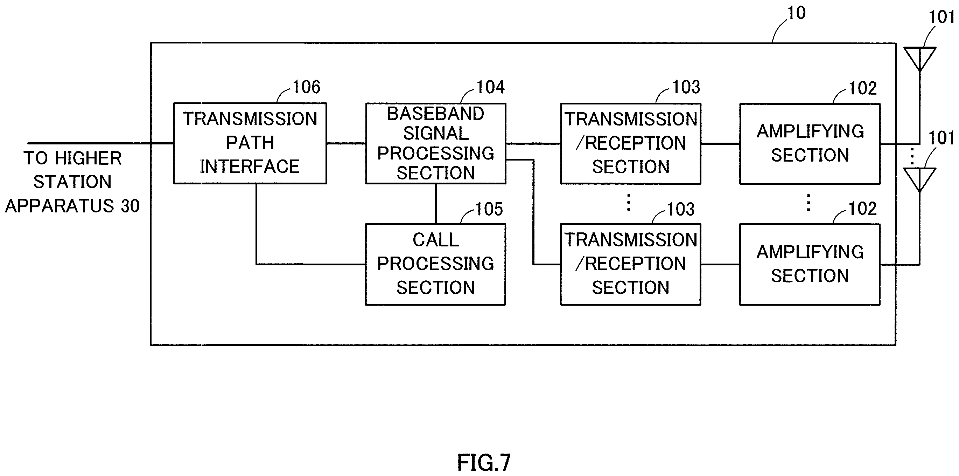

Fig. 7 is a diagram illustrating the entire configuration of the radio base station 10 (including the radio base stations 11 and 12) according to the present embodiment. The radio base station 10 is configured to have a plurality of transmission/reception antennas 101 for MIMO transmission, amplifying sections 102, transmission/reception sections (transmission sections, reception sections) 103, a baseband signal processing section 104, a call processing section 105 and a transmission path interface 106.

User data that is to be transmitted on the downlink from the radio base station 10 to the user terminal 20 is input from the higher station apparatus 30, through the transmission path interface 106, into the baseband signal processing section 104.

In the baseband signal processing section 104, signals are subjected to PDCP layer processing, RLC (Radio Link Control) layer transmission processing such as division and coupling of user data and RLC retransmission control transmission processing, MAC (Medium Access Control) retransmission control, including, for example, HARQ transmission processing, scheduling, transport format selection, channel coding, inverse fast Fourier transform (IFFT) processing, and precoding processing, and resultant signals are transferred to the transmission/reception sections 103. As for signals of the downlink control channel, transmission processing is performed, including channel coding and inverse fast Fourier transform, and resultant signals are also transferred to the transmission/reception sections 103.

Also, the baseband signal processing section 104 notifies each user terminal 20 of control information for communication in the corresponding cell by a broadcast channel. When the user terminal is connected to both of the radio base station 11 and the radio base station 12, (dual connection), the radio base station 12 serving as a central control station may notify the user terminal of information by a broadcast channel.

In the transmission/reception sections 103, baseband signals that are precoded per antenna and output from the baseband signal processing section 104 are subjected to frequency conversion processing into a radio frequency band. The frequency-converted radio frequency signals are amplified by the amplifying sections 102 and then, transmitted from the transmission/reception antennas 101.

Meanwhile, as for data to be transmitted on the uplink from the user terminal 20 to the radio base station 10, radio frequency signals are received in the transmission/reception antennas 101, amplified in the amplifying sections 102, subjected to frequency conversion and converted into baseband signals in the transmission/reception sections 103, and are input to the baseband signal processing section 104.

The baseband signal processing section 104 performs FFT processing, IDFT processing, error correction decoding, MAC retransmission control reception processing, and RLC layer and PDCP layer reception processing on the user data included in the baseband signals received as input. Then, the signals are transferred to the higher station apparatus 30 through the transmission path interface 106. The call processing section 105 performs call processing such as setting up and releasing a communication channel, manages the state of the radio base station 10 and manages the radio resources.

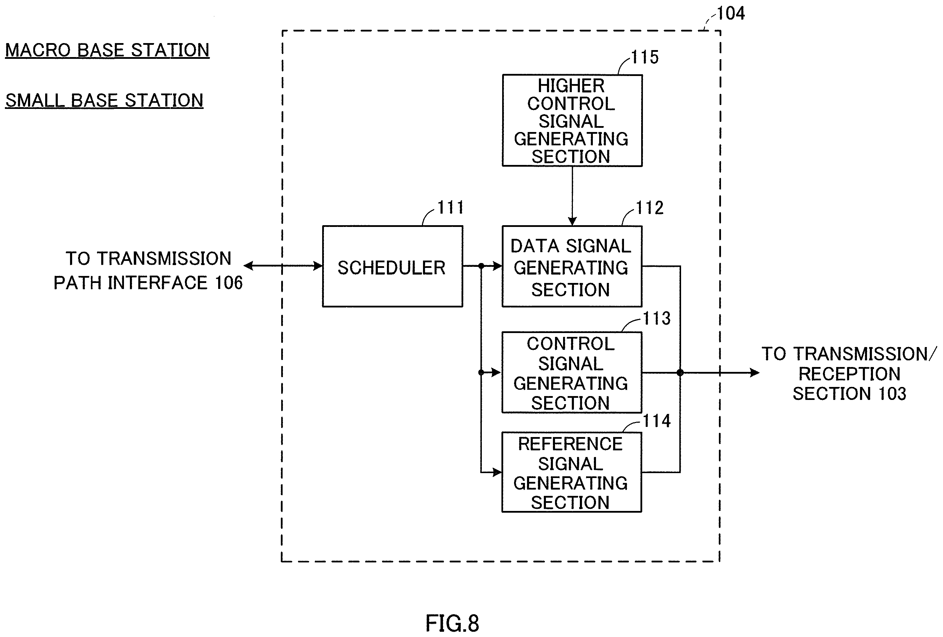

Fig. 8 is a diagram illustrating principal functional structures of the baseband signal processing section 104 provided in the radio base station 10 (including the radio base stations 11 and 12) according to the present embodiment. As illustrated in Fig. 8, the baseband signal processing section 104 of the radio base station 10 is configured to have a scheduler 111, a data signal generating section 112, a control signal generating section 113, a reference signal generating section 114, and a higher control signal generating section 115. The baseband signal processing section 104 also has the functional sections to perform retransmission control transmission processing, channel coding, precoding, IFFT processing and so on.

The scheduler 111 performs scheduling of downlink user data to be transmitted on PDSCH, downlink control information to be transmitted on PDCCH and/or enhanced PDCCH (EPDCCH) and reference signals. Specifically, the scheduler 111 allocates radio resources based on feedback information (for example, CSI including CQI and RI) from each user terminal 20 and instruction information from the higher station apparatus 30. The scheduler 111 may be configured to perform scheduling of each small base station 12.

The higher control signal generating section 115 generates information about a cell ID of the macro cell C1, information about USID of the small cell C2, information about the system bandwidth and so on. The information about USID includes first USID and second USID when the user terminal 20 generates USID from the first and second USIDs. The information about USID also includes USID generated from the first and second USIDs when the radio base station 10 generates USID for the small cell C2 from the first and second USIDs.

The data signal generating section 112 generates a data signal (PDSCH signal) for the user terminal 20 that is determined to be allocated to each subframe by the scheduler 111. The data signal generated by the data signal generating section 112 includes higher control signals generated by the higher control signal generating section 115.

The control signal generating section 113 generates a control signal (PDCCH signal and/or EPDCCH signal) for the user terminal 20 that is determined to be allocated to each subframe by the scheduler 111. The reference signal generating section 114 generates various reference signals to be transmitted on the downlink. When the radio base station 10 is the radio base station 12 of the small cell C2, the reference signal generating section 114 generates DS (Discovery Signal) that is a synchronization signal for the small cell.

Here, in the present embodiment, the information about the USID is described as being given by a higher control signal, however this is not intended to limit the present invention. The information about USID may be given by a control channel or a broadcast channel. Or, the USID may be given from the radio base station 11 of the macro cell C1 to the user terminal 20 or may be given from the radio base station 12 of the small cell C2 to the user terminal 20. When the USID is given from the radio base station 12, it may be associated with DS for detection of the small cell.

Or, the first USID and the second USID may be given by different methods. The first USID may be given from the radio base station 11 of the macro cell C1 to the user terminal 20 and the second USID may be associated with DS and given from the radio base station 12 of the small cell C2 to the user terminal 20. Or, the first USID may be given from the radio base station 11 of the macro cell C1 to the user terminal 20 by RRC signaling and the second USID may be given in association with the cell ID for the macro cell C1. Application of the second USID may be associated with whether NCT or TM is applied or not.

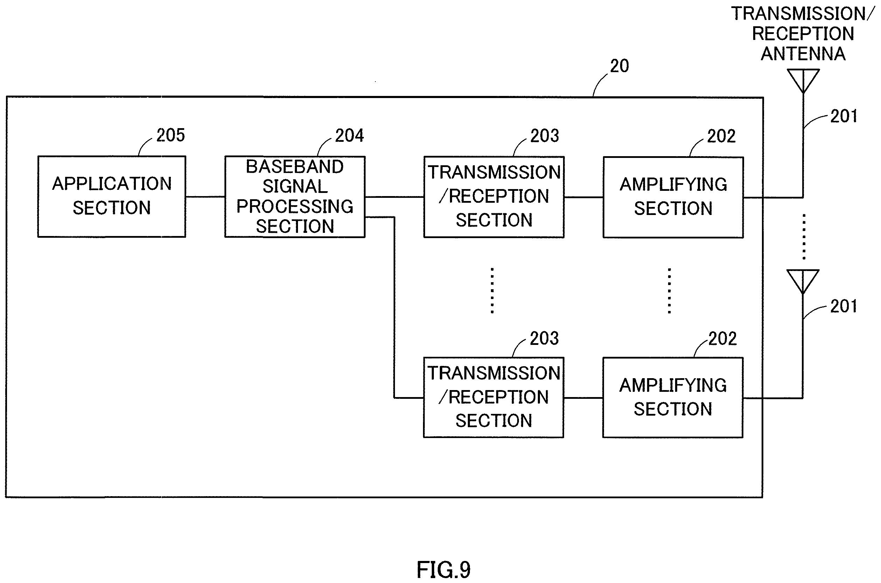

Fig. 9 is a diagram illustrating the overall configuration of the user terminal 20 according to the present embodiment. The user terminal 20 is configured to have a plurality of transmission/reception antennas 201 for MIMO transmission, amplifying sections 202, transmission/reception sections (reception sections) 203, a baseband signal processing section 204, and an application section 205.

As for the downlink data, radio frequency signals received by the transmission/reception antennas 201 are amplified in the amplifying sections 202, and then, subjected to frequency conversion and converted into baseband signals in the transmission/reception sections 203. These baseband signals are subjected to FFT processing, error correction coding, reception processing for retransmission control and so on in the baseband signal processing section 204. In this downlink data, downlink user data is transferred to the application section 205. The application section 205 performs processing related to higher layers above the physical layer and the MAC layer. In the downlink data, broadcast information is also transferred to the application section 205.

On the other hand, uplink user data is input from the application section 205 to the baseband signal processing section 204. In the baseband signal processing section 204, retransmission control (HARQ-ACK (Hybrid ARQ)) transmission processing, channel coding, precoding, DFT processing, IFFT processing and so on are performed, and the resultant signals are transferred to the transmission/reception sections 203.

In the transmission/reception sections 203, the baseband signals output from the baseband signal processing section 204 are subjected to frequency conversion and converted into a radio frequency band. After that, the frequency-converted radio frequency signals are amplified in the amplifying sections 202, and then, transmitted from the transmission/reception antennas 201. Each transmission/reception section 203 serves as a reception section configured to receive information about the subframe type given from the radio base station and so on.

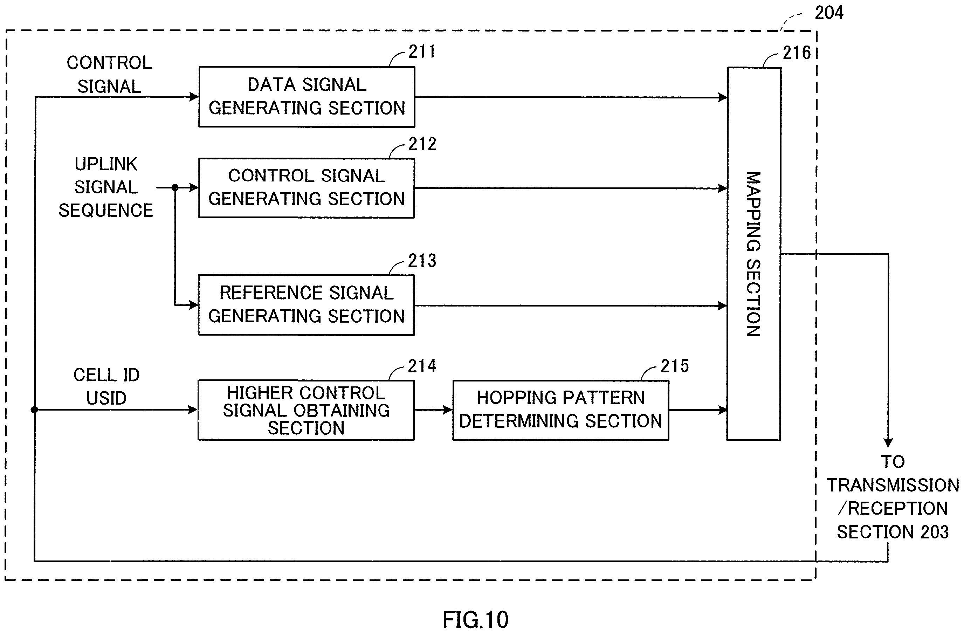

Fig. 10 is a diagram illustrating principal functional structures of the baseband signal processing section 204 provided in the user terminal 20. As illustrated in Fig. 10, the baseband signal processing section 204 of the user terminal 20 has at least a data signal generating section 211, a control signal generating section (signal generating section) 212, a reference signal generating section (signal generating section) 213, a higher control signal obtaining section 214, a hopping pattern determining section 215 and a mapping section (signal allocating section) 216. As described above, the baseband signal processing section 204 also has functional sections to perform retransmission control transmission processing, channel coding, precoding, DFT processing, IFFT processing and other processing.

The data signal generating section 211 generates data signals (PUSCH signals) for the radio base station 10 based on downlink control signals. The control signal generating section 212 generates feedback information (PUCCH signals) for the radio base station 10 based on uplink signal sequences such as Zadoff-Chu sequences. The reference signal generating section 213 generates various reference signals (DM-RS, etc.) to be transmitted on the downlink, based on uplink signal sequences such as Zadoff-Chu sequences. When group hopping is disabled in the hopping pattern determining section 215, the control signal generating section 212 and the reference signal generating section 213 generates signals from uplink signal sequences in decreasing order of the number of signal sequences (sequence length).

The higher control signal obtaining section 214 obtains higher control signals given from the radio base station 10. The higher control signals include information about the cell ID of the macro cell C1, information about USID of the small cell C2, information about the system bandwidth and so on. The higher control signal obtaining section 214 may obtain USID generated in the radio base station 10 as the information about USID. In this case, the higher control signal obtaining section 214 may obtain USID from the radio base station 11 of the macro cell C1 or may obtain USID form the radio base station 12 of the small cell C2.

Further, the higher control signal obtaining section 214 may obtain first USID and second USID from the radio base station 10 to generate USID at the user terminal 20 (see Fig. 5). In this case, higher control signal obtaining section 214 may obtain the first USID from the radio base station 11 of the macro cell C 1 and obtain the second USID from the radio base station 12 of the small cell C2.

The hopping pattern determining section 215 determines a hopping pattern based on a higher control signal obtained in the higher control signal obtaining section 214. The hopping pattern determining section 215 determines a hopping pattern for the macro cell C1 (PCell) by a pseud random sequence that is initialized based on the cell ID of the macro cell C1. The hopping pattern determining section 215 also determines a hopping pattern for the small cell C2 (SCell) by a pseud random sequence that is initialized based on USID of the small cell C2. The initial value $C_{init}$ of the pseud random sequence is initialized, for example, by the equation (4). Here, $n^{RS}_{ID}$ denotes cell ID or USID.

[EQUATION 3]

$$(4)$$

$$c_{\text{init}} = \left\lfloor \frac{n_{\text{ID}}^{\text{RS}}}{30} \right\rfloor$$

The hopping pattern determined in the hoping pattern determining section 215 is configured in the small cell C2 in a longer cycle than that in the macro cell C1 (see Fig. 3). Therefore, if there is a limit in the number of root sequences of uplink signal sequences, it is possible to randomize uplink channels and signals by the group hopping. Particularly, this is effective to the case where the number of uplink signal sequences is not able to be increased like in narrow band transmission.

The hopping pattern determining section 215 may control ON/OFF of group hopping based on the system bandwidth obtained in the higher control signal obtaining section 214. For example, in the case of narrow band transmission in which the system bandwidth of the small cell C2 is narrower than a predetermined bandwidth, group hopping is enabled and in the case of broadband transmission in which the system bandwidth is broader than the predetermined bandwidth, the group hopping may be disabled. In disabling the group hopping, the number of uplink signal sequences is increased without cancelling the group hopping. In the case of broadband transmission, randomizing between small cells is achieved by increasing the number of signal sequences to be equal to the number of subcarriers. Here, the group hopping may be enabled in broadband transmission. With this structure, it is possible to achieve increase in uplink signal sequences and randomizing by hopping pattern.

The mapping section 216 maps data signals generated in the data signal generating section 211, control signals generated in the control signal generating section 212 and reference signals generated in the reference signal generating section 213 to predetermined resources. In this case, DM-RSs and PUCCH signals generated from uplink signal sequences are mapped based on the hopping pattern determined by the hopping pattern determining section 215. For example, as for DM-RSs and PUCCH signals for the macro cell, they are mapped based on a hopping pattern in a relatively short 10-subframe cycle (see Fig. 3A). In addition, as for the DM-RSs and PUCCH signals for the small cell, they are mapped based on a hopping pattern in a relatively long cycle (see Fig. 3B). When the group hopping is disabled, the mapping section 216 performs mapping without use of any hopping pattern.

Thus, as the user terminal 20 uses a longer-cycle hopping pattern for the small cell C2 than that for the macro cell C1, it is possible to randomize uplink signal sequences in accordance with increase in small cells C2. Besides, in the broadband transmission, it is possible to orthogonalize uplink signal sequences by increasing the number of uplink signal sequences in accordance with the number of subcarriers. Therefore, when many small cells C2 are located in the macro cell C1, it is possible to simplify cell planning of the small cells C2.

In the present embodiment, the user terminal 20 is configured to determine a hopping pattern by being notified of USID from the radio base station 10, however, the present invention is not limited to this structure. The radio base station 10 may determine a hopping pattern and notify the user terminal 20 of the hopping pattern. Notification of the hopping pattern may be given by any of a higher control signal, a control channel and a broadcast channel. In addition, the hopping pattern may be given in association with USID and second USID.

Further, in the present embodiment, the radio base station 10 notifies the user terminal 20 of a system bandwidth thereby to instruct ON/OF of group hopping and increase in the number of uplink signal sequences, however the present invention is not limited to this structure. The radio base station 10 may determine ON/OFF of the group hopping and the number of uplink signal sequences and notifies the user terminal 20 of ON/OFF of the group hopping and the number of uplink signal sequences. Notification of the number of uplink signal sequences and ON/OFF of group hopping may be given by any of a higher control signal, a control channel and a broadcast channel. In addition, the hopping pattern may be given in association with USID and second USID.

Thus, according to the radio communication system 1 of the present embodiment, in the small cell C2, uplink signal sequences are hopped using a longer-cycle hopping pattern than that of the macro cell C1. With this structure, it is possible to randomize uplink signal sequences well between small cells C without increase in the number of signal sequences. This further makes it possible to achieve randomizing of uplink control signals generated from uplink signal sequences and also possible to simply cell planning in locating a plurality of small cells C2 in the macro cell C 1.

The present invention is not limited to the above-described embodiments and may be embodied in various modified forms. For example, the number of carriers, the bandwidth of each carrier, signaling method, the number of processing sections and processing procedure may be modified appropriately without departing from the scope of the present invention. Any other modifications may also be made without departing from the scope of the present invention.

For example, according to the present embodiment, a hopping pattern for a small cell is determined based on USID, however this is not intended to limit the present invention. The hopping pattern may be determined in any method as long as the hopping pattern of the small cell has a longer cycle than that of the macro cell. Accordingly, the randomizing method according to the present embodiment is also applicable to a communication system without application of USID.

Further, according to the present embodiment, the present invention is applied to a communication system applied with NCT for small cell, however, this is not intended to limit the present invention. The present invention is also applicable to the case where the small cell and the macro cell share the same carrier.

Further, the present embodiment has been described by way of example of DM-RSs and PUCCH signals generated by uplink signal sequences, however, this is not intended to limit the present invention. The present invention is also applicable to SRS and other reference signals, other physical channel signals and so on.

Further, according to the present embodiment, the hopping pattern determining section 215 is configured to determine whether or not the system bandwidth is a predetermined bandwidth or more. However, this is not intended to limit the present invention. The baseband signal processing section 204 may be provided with a determining section configured to determine whether or not the system bandwidth is equal to or greater than the predetermined bandwidth.

**Claims**

1. A user terminal that is capable of communicating with a macro base station covering a macro cell and a small base station covering a small cell located within the macro cell, the user terminal comprising:

   a signal generating section that generates uplink signals using uplink signal sequences of zero autocorrelation except at a synchronization point; and
   a signal allocating section that allocates the uplink signals to subframes by using a hopping pattern where a sequence number of an uplink signal sequence is switched per subframe in a predetermined cycle, **characterized in that** a hopping cycle of the uplink signal sequences in a hopping pattern for the small base station is longer than a hopping cycle of the uplink signal sequences in a hopping pattern for the macro base station.

2. The user terminal according to claim 1, wherein, the user terminal is able to be connected to the small base station after synchronization is established with the macro base station.

3. The user terminal according to claim 1 or 2, wherein the signal generating section generates the uplink signals by increasing the uplink signal sequences in number in broadband transmission of a band broader than a predetermined band.

4. The user terminal according to claim 3, wherein the signal allocating section enables hopping in narrow band transmission of a band narrower than a predetermined band and disables hopping in the broadband transmission of the band broader than a predetermined band.

5. The user terminal according to claim 4, wherein when the hopping pattern is enabled, the signal allocating section allocates uplink signals of different sequence numbers to a first-half slot and a latter-half slot within a subframe, and when the hopping pattern is disabled, the signal allocating section allocates uplink signals of a same sequence number to the first-half slot and the latter-half slot within the subframe.

6. The user terminal according to claim 1, wherein the uplink signal sequences are used in generation of DM-RS (demodulation reference signal) and PUCCH (Physical Uplink Control Channel).

7. The user terminal according to claim 1, wherein the hopping pattern is determined based on an identifier for the small cell that is calculated from a user-specific first identifier and a user-specific second identifier.

8. The user terminal according to claim 7, wherein the first identifier varies depending on physical channels and signals and the second identifier is commonly used over the physical channels and signals.

9. A small base station that covers a small cell located within a macro cell covered by a macro base station, the small base station comprising;
   a transmission section that transmits a cell identifier for the small cell to a user terminal; and
   a reception section that receives, from the user terminal, uplink signals generated by using uplink signal sequences of zero autocorrelation except at a synchronization point,
   wherein the cell identifier for the small cell is configured to make the user terminal determine a hopping pattern where a sequence number of an uplink signal sequence is switched per subframe in a predetermined cycle, and
   **characterized in that** a hopping cycle of the uplink signal sequences in a hopping pattern for the small base station is longer than a hopping cycle of the uplink signal sequences in a hopping pattern for the macro base station.

10. A communication method for allowing a user terminal to communicate with a macro base station covering a macro cell and a small base station covering a small cell located within the macro cell, the communication method comprising the steps of:

transmitting, in the small base station, a cell identifier for small cell to the user terminal;
generating, in the user terminal, uplink signals using uplink signal sequences of zero autocorrelation except at a synchronization point; and
determining, in the user terminal, a hopping pattern where a sequence number of an uplink signal sequence is switched per subframe in a predetermined cycle, and allocating the uplink signals to subframes by using the hopping pattern, **characterized in that** a hopping cycle of the uplink signal sequences in a hopping pattern for the small base station is longer than a hopping cycle of the uplink signal sequences in a hopping pattern for the macro base station.

## Patentansprüche

1. Benutzerendgerät, das in der Lage ist, mit einer Makro-Basisstation, die eine Makro-Zelle abdeckt, und mit einer kleinen Basisstation, die eine innerhalb der Makro-Zelle gelegene, kleine Zelle abdeckt, zu kommunizieren, wobei das Benutzerendgerät umfasst:

einen Signalerzeugungsabschnitt, der Uplink-Signale unter Verwendung von Uplink-Signalsequenzen von Null-Autokorrelation, außer an einem Synchronisationspunkt, erzeugt; und
einen Signalzuweisungsabschnitt, der den Uplink-Signalen Subrahmen zuweist durch Verwenden eines Sprungmusters, bei dem eine Sequenznummer einer Uplink-Signalsequenz pro Subrahmen in einem vorbestimmten Zyklus geschaltet wird,
**dadurch gekennzeichnet, dass**
ein Sprungzyklus der Uplink-Signalsequenzen in einem Sprungmuster für die kleine Basisstation länger ist als ein Sprungzyklus der Uplink-Signalsequenzen in einem Sprungmuster für die Makro-Basisstation.

2. Benutzerendgerät nach Anspruch 1, wobei das Benutzerendgerät in der Lage ist, mit der kleinen Basisstation verbunden zu werden, nachdem Synchronisation mit der Makro-Basisstation hergestellt ist.

3. Benutzerendgerät nach Anspruch 1 oder 2, wobei der Signalerzeugungsabschnitt die Uplink-Signale erzeugt durch Erhöhen einer Anzahl der Uplink-Signalsequenzen bei Breitbandübertragung eines Bandes, das breiter ist als ein vorbestimmtes Band.

4. Benutzerendgerät nach Anspruch 3, wobei der Signalzuweisungsabschnitt ein Springen bei Schmalbandübertragung eines Bandes, das schmaler ist als ein vorbestimmtes Band, ermöglicht und ein Springen bei Breitbandübertragung des Bandes, das breiter ist als ein vorbestimmtes Band, deaktiviert.

5. Benutzerendgerät nach Anspruch 4, wobei, wenn das Sprungmuster aktiviert ist, der Signalzuweisungsabschnitt Uplink-Signale verschiedener Sequenznummern einem Slot einer ersten Hälfte und einem Slot einer zweiten Hälfte innerhalb eines Subrahmens zuweist und wobei, wenn das Sprungmuster deaktiviert ist, der Signalzuweisungsabschnitt Uplink-Signale einer gleichen Sequenznummer dem Slot der ersten Hälfte und dem Slot der zweiten Hälfte innerhalb des Subrahmens zuweist.

6. Benutzerendgerät nach Anspruch 1, wobei die Uplink-Signalsequenzen bei der Erzeugung von DM-RS (Demodulationsbezugssignal) und PUCCH (physikalischer Uplink-Steuerkanal) verwendet werden.

7. Benutzerendgerät nach Anspruch 1, wobei das Sprungmuster basierend auf einer Kennung für die kleine Zelle bestimmt wird, die von einer benutzerspezifischen ersten Kennung und einer benutzerspezifischen zweiten Kennung berechnet wird.

8. Benutzerendgerät nach Anspruch 7, wobei die erste Kennung in Abhängigkeit von physikalischen Kanälen und Signalen variiert und die zweite Kennung von den physikalischen Kanälen und Signalen gemeinsam genutzt wird.

**9.** Kleine Basisstation, die eine kleine Zelle abdeckt, die innerhalb einer von einer Makro-Basisstation abgedeckten Makro-Zelle gelegen ist, wobei die kleine Basisstation umfasst:

einen Übertagungsabschnitt, der eine Zellkennung für die kleine Zelle zu einem Benutzerendgerät überträgt; und einen Empfangsabschnitt, der von dem Benutzerendgerät Uplink-Signale empfängt, die erzeugt worden sind unter Verwendung von Uplink-Signalsequenzen von Null-Autokorrelation, außer an einem Synchronisationspunkt,

wobei die Zellkennung für die kleine Zelle konfiguriert ist, um zu veranlassen, dass das Benutzerendgerät ein Sprungmuster bestimmt, bei dem eine Sequenznummer einer Uplink-Signalsequenz pro Subrahmen in einem vorbestimmten Zyklus geschaltet wird, und

**dadurch gekennzeichnet, dass**

ein Sprungzyklus der Uplink-Signalsequenzen in einem Sprungmuster für die kleine Basisstation länger ist als ein Sprungzyklus der Uplink-Signalsequenzen in einem Sprungmuster für die Makro-Basisstation.

**10.** Kommunikationsverfahren, das einem Benutzerendgerät ermöglicht, mit einer Makro-Basisstation, die eine Makro-Zelle abdeckt, und mit einer kleinen Basisstation, die eine innerhalb der Makro-Zelle gelegene, kleine Zelle abdeckt, zu kommunizieren, wobei das Verfahren die folgenden Schritte umfasst:

Übertragen, in der kleinen Basisstation, einer Zellkennung für eine kleine Zelle zu dem Benutzerendgerät; Erzeugen, in dem Benutzerendgerät, von Uplink-Signalen unter Verwendung von Uplink-Signalsequenzen von Null-Autokorrelation, außer an einem Synchronisationspunkt; und

Bestimmen, in dem Benutzerendgerät, eines Sprungmusters, bei dem eine Sequenznummer einer Uplink-Signalsequenz pro Subrahmen in einen vorbestimmten Zyklus geschaltet wird, und Zuweisen der Uplink-Signale zu Subrahmen unter Verwendung des Sprungmusters,

**dadurch gekennzeichnet, dass**

ein Sprungzyklus der Uplink-Signalsequenzen in einem Sprungmuster für die kleine Basisstation länger ist als ein Sprungzyklus der Uplink-Signalsequenzen in einem Sprungmuster für die Makro-Basisstation.

**Revendications**

**1.** Terminal utilisateur qui est capable de communiquer avec une macro station de base couvrant une macrocellule et avec une petite station de base couvrant une petite cellule située à l'intérieur de la macrocellule, le terminal utilisateur comprenant :

une section de génération de signaux qui génère des signaux de liaison montante à l'aide de séquences de signaux de liaison montante d'autocorrélation nulle sauf à un point de synchronisation ; et une section d'attribution de signaux qui attribue les signaux de liaison montante à des sous-trames à l'aide d'un motif de saut où un numéro de séquence d'une séquence de signaux de liaison montante est commuté par sous-trame dans un cycle prédéterminé,

**caractérisé en ce que**

un cycle de saut des séquences de signaux de liaison montante dans un motif de saut pour la petite station de base est plus long qu'un cycle de sauts des séquences de signaux de liaison montante dans un motif de saut pour la macro station de base.

**2.** Terminal utilisateur selon la revendication 1, dans lequel, le terminal utilisateur est capable d'être relié à la petite station de base après qu'une synchronisation soit établie avec la macro station de base.

**3.** Terminal utilisateur selon la revendication 1 ou 2, dans lequel la section de génération de signaux génère les signaux de liaison montante par une augmentation des séquences de signaux de liaison montante en nombre dans une transmission à large bande d'une bande plus large qu'une bande prédéterminée.

**4.** Terminal utilisateur selon la revendication 3, dans lequel la section d'attribution de signaux permet un saut dans une transmission à bande étroite d'une bande plus étroite qu'une bande prédéterminée et empêche un saut dans la transmission à large bande de la bande plus large qu'une bande prédéterminée.

**5.** Terminal utilisateur selon la revendication 4, dans lequel, lorsque le motif de saut est permis, la section d'attribution de signaux attribue des signaux de liaison montante de différents numéros de séquences à un premier demi créneau et à un dernier demi créneau à l'intérieur d'une sous-trame, et lorsque le motif de saut est empêché, la section d'attribution de signaux attribue des signaux de liaison montante d'un même numéro de séquence au premier demi créneau et au dernier demi créneau à l'intérieur de la sous-trame.

6. Terminal utilisateur selon la revendication 1, dans lequel les séquences de signaux de liaison montante sont utilisées dans une génération d'un DM-RS (signal de référence de démodulation) et d'un PUCCH (canal physique de commande en liaison montante).

7. Terminal utilisateur selon la revendication 1, dans lequel le motif de saut est déterminé sur la base d'un identifiant pour la petite cellule qui est calculé à partir d'un premier identifiant spécifique à un utilisateur et d'un second identifiant spécifique à un utilisateur.

8. Terminal utilisateur selon la revendication 7, dans lequel le premier identifiant varie en fonction de canaux physiques et de signaux, et le second identifiant est communément utilisé dans les canaux physiques et signaux.

9. Petite station de base qui couvre une petite cellule située à l'intérieur d'une macrocellule couverte par une macro station de base, la petite station de base comprenant :

une section de transmission qui transmet un identifiant de cellule pour la petite cellule à un terminal utilisateur; et une section de réception qui reçoit, du terminal utilisateur, des signaux de liaison montante générés à l'aide de séquences de signaux de liaison montante d'autocorrélation nulle sauf à un point de synchronisation, dans lequel l'identifiant de cellule pour la petite cellule est configuré pour faire en sorte que le terminal utilisateur détermine un motif de saut où un numéro de séquence d'une séquence de signaux de liaison montante est commuté par sous-trame dans un cycle prédéterminé, et **caractérisé en ce que** un cycle de saut des séquences de signaux de liaison montante dans un motif de saut pour la petite station de base est plus long qu'un cycle de saut des séquences de signaux de liaison montante dans un motif de saut pour la macro station de base.

10. Procédé de communication pour autoriser un terminal utilisateur à communiquer avec une macro station de base couvrant une macrocellule et avec une petite station de base couvrant une petite cellule située à l'intérieur de la macrocellule, le procédé de communication comprenant les étapes de :

transmission, dans la petite station de base, d'un identifiant de cellule pour petite cellule au terminal utilisateur; génération, dans le terminal utilisateur, de signaux de liaison montante à l'aide de séquences de signaux de liaison montante d'autocorrélation nulle sauf à un point de synchronisation ; et détermination, dans le terminal utilisateur, d'un motif de saut où un numéro de séquence d'une séquence de signaux de liaison montante est commuté par sous-trame dans un cycle prédéterminé, et attribution des signaux de liaison montante à des sous-trames à l'aide du motif de saut, **caractérisé en ce qu'**un cycle de saut des séquences de signaux de liaison montante dans un motif de saut pour la petite station de base est plus long qu'un cycle de saut des séquences de signaux de liaison montante dans un motif de saut pour la station de base.

FIG.1

MACRO CELL (OUTDOOR) AND SMALL CELL (OUTDOOR)

- - - - - - - - BACKHAUL LINK WITHIN CLUSTER

————————— BACKHAUL LINK BETWEEN SMALL CELLS AND MACRO CELL

FIG.2

# FIG.3A

PCELL(CONVENTIONAL 10-MSEC CYCLE HOPPING)

| | | | | | | | | | | | |
|---|---|---|---|---|---|---|---|---|---|---|---|
| 3 | 10 | 12 | 25 | 4 | 13 | 7 | 29 | 15 | 11 | 3 | 10 |
| | | | | | | | | | | | |

···

←→ SUBFRAME

# FIG.3B

NCT OR SCELL(LONG-CYCLE HOPPING LIKE SRS)

| | | | | | | | | | | | |
|---|---|---|---|---|---|---|---|---|---|---|---|
| 3 | 10 | 12 | 25 | 4 | 13 | 7 | 29 | 15 | 11 | 8 | 20 |
| | | | | | | | | | | | |

···

←→ SUBFRAME

EP 2 983 431 B1

## FIG.4A

NARROW BAND TRANSMISSION
(HOPPING TO DIFFERENT SEQUENCE IN A SUBFRAME)

FIRST-　　　　　LATTER-
HALF SLOT　　　HALF SLOT

RANDOMIZING EFFECT IS PRIORITIZE

## FIG.4B

BROADBAND TRANSMISSION
(SAME SEQUENCE IS USED IN A SUBFRAME)

FIRST-　　　　　LATTER-
HALF SLOT　　　HALF SLOT

ORTHOGONALIZATION BY OCC IS PRIORITIZED

## FIG.5A

| 1ST USID<br>(504 USIDS) | ⊗ | 2ND USID<br>(X USIDS) |

X < 504  OR  X = 504  OR  X > 504

## FIG.5B

|  | INDEPENDENT | COMMON |
| --- | --- | --- |
| CHANNEL/SIGNAL #A | 1ST USID #A<br>(504 USIDS) ⊗ | 2ND USID<br>(X USIDS) |
| CHANNEL/SIGNAL #B | 1ST USID #B<br>(504 USIDS) ⊗ | 2ND USID<br>(X USIDS) |
| CHANNEL/SIGNAL #C | 1ST USID #C<br>(504 USIDS) ⊗ | 2ND USID<br>(X USIDS) |

FIG.6

FIG.7

EP 2 983 431 B1

MACRO BASE STATION

SMALL BASE STATION

FIG.8

EP 2 983 431 B1

EP 2 983 431 B1

TRANSMISSION/
RECEPTION
ANTENNA

20

205

APPLICATION
SECTION

204

BASEBAND
SIGNAL
PROCESSING
SECTION

203

TRANSMISSION
/RECEPTION
SECTION

202

AMPLIFYING
SECTION

201

203

TRANSMISSION
/RECEPTION
SECTION

202

AMPLIFYING
SECTION

201

FIG.9

FIG.10

EP 2 983 431 B1

ORTHOGONALIZATION IN COMB          DATA TRANSMISSION BETWEEN COMB TEETH

F ↑                                                F ↑

→ T                                                → T

FIRST-        LATTER-                              FIRST-        LATTER-
HALF SLOT     HALF SLOT                            HALF SLOT     HALF SLOT

SWITCHING
CONTROL

F ↑

→ T

FIRST-        LATTER-
HALF SLOT     HALF SLOT

COMBINED USE OF COMB AND OCC

FIG.11

EP 2 983 431 B1

MULTI–POINT PL ESTIMATION

**Alt. 1: Virtual path loss:** TP group

$$PL = f(PL_i \in \Omega)$$

e.g., harmonic mean of path loss

**Alt. 2: Virtual P$_{CMAX}$:**

$$\widetilde{P}_{CMAX} = \min(P_{CMAX}, g(PL_i \in \Omega, IoT_{Max}))$$

Tx power with certain interference level

FIG.12

EP 2 983 431 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20130039285 A, S.Sorrentino

**Non-patent literature cited in the description**

• E-UTRA Further advancements for E-UTRA physical layer aspects. *3GPP TR 36.814*